# EUROPÄISCHE PATENTSCHRIFT

(11) **EP 2 013 041 B1**
(45) Veröffentlichungstag und Bekanntmachung des Hinweises auf die Patenterteilung: **11.08.2010**
(21) Anmeldenummer: 07724728.6
(22) Anmeldetag: 30.04.2007
(51) Int. Cl.: B60F 1/04, E01B 29/16, E01B 29/02

(54) **TRANSPORTGERÄT**
TRANSPORTATION DEVICE
APPAREIL DE TRANSPORT

(30) Priorität: 02.05.2006 AT 7472006; 24.07.2006 AT 12502006
(43) Veröffentlichungstag der Anmeldung: 14.01.2009
(73) Patentinhaber: ÖBB-Infrastruktur Aktiengesellschaft, 1120 Wien (AT)
(72) Erfinder: KETTL, Alois, A-4742 Pram (AT)
(74) Vertreter: Puchberger, Peter
(86) Internationale Anmeldenummer: PCT/EP2007/003801
(87) Internationale Veröffentlichungsnummer: WO 2007/124944

(56) Entgegenhaltungen:
- DE-A1- 2 309 930
- DE-A1- 3 706 563
- DE-T2- 69 923 257
- DE-U1- 29 515 354
- GB-A- 2 306 416

## Beschreibung

Die Erfindung betrifft ein Fahrzeug mit Schienenrädern zum Fahren auf einem Geleise und einem Ketten- oder Radantrieb zum Fahren auf dem Gelände oder Straße, wobei der Ketten- oder Radantrieb zu den Schienenrädern vertikal verstellbar und in seiner Fahrtrichtung gegenüber der Fahrtrichtung der Schienenräder schwenkbar ist, wobei die Schienenräder an einem oberen Fahrzeugrahmen und der Ketten- oder Radantrieb an einem unteren Fahrzeugrahmen angeordnet sind, und der obere Fahrzeugrahmen zur Aufnahme von Lasten wie Schienen, Fahrzeugaufbauten, Arbeitsgeräte wie Schienengreifer etc eingerichtet ist.

Derartige Arbeitsgeräte dienen dem Transport von Lasten und insbesondere von Schienen auf dem Geleise und sollen in der Lage sein, aus dem Gleisbereich seitlich herauszufahren und die Lasten wie Schienen exakt an den Einsatzort zu bringen und abzulegen. In analoger Weise soll das Fahrzeug auch mit einem Eisenbahnwaggon oder Lastkraftwagen in die Nähe des Einsatzortes heranfahrbar sein, um dann sowohl seitlich an das Geleise heranzufahren als auch auf dem Geleise in Schienenrichtung sich bewegen zu können. Weiters soll das Fahrzeug geeignet sein, die heutzutage sehr langen Schienenstücke mit einem Greifer und einer Ladefläche handhaben zu können.

Das Fahrzeug soll klein genug sein, dass es in einem Waggon oder auf einem üblichen LKW verstaut werden kann. Andererseits soll der Radstand für das Fahren auf unebenem Gelände möglichst groß sein.

Im Stand der Technik sind Transporteinrichtungen bekannt, die sowohl über Schienenräder zum Fahren auf einem Geleise, als auch über Ketten- oder Radantriebe zum Fahren auf dem Gelände verfügen.

Die DE 37 06 563 offenbart eine fahrbare Anlage zum Transportieren von Gleisjochen, wobei ein Ketten- oder Radantrieb vorgesehen ist, der zu den Schienenrädern vertikal verstellbar und in seiner Fahrtrichtung schwenkbar ist.

Die DE 23 09 930 beschreibt eine Vorrichtung zum Verlegen von Gleisabschnitten mit zwei seitlichen Fahrorganen, vorzugsweise Raupen, und einer daran vertikal verstellbaren Trageeinrichtung, welche über sich an die Schienen anlegende Rollen verfügt, die als Laufrollen für das Verfahren der Vorrichtung dienen.

Die DE 295 15 354 zeigt ein Fahrzeug zum Verladen von Schienen mit einem Rahmen, der über mindestens zwei schienengängige Laufdrehgestelle verfügt, sowie einer daran befestigten absenkbaren Raupe zum schienenunabhängigen Verfahren der Vorrichtung.

Schließlich ist aus DE 699 23 257 ebenfalls eine Vorrichtung zum Verlegen von Eisenbahngeleisen bekannt, bestehend aus einem Fahrzeug mit Eigenantrieb und Rädern zum Verschieben auf Schienen, einer Platte zum Transport der Gleiselemente, sowie mindestens einem Paar einziehbarer Raupen zur Fortbewegung im Gelände.

Ein wesentlicher Nachteil dieser Konstruktionen aus dem Stand der Technik liegt in der mangelnden Flexibilität der Fahrzeuge in Bezug auf die Manövrierfähigkeit im Gleisbereich und die Bereitstellung der Ladung. Bei den bekannten Konstruktionen ist das Hantieren mit den sehr langen Schienen problematisch. Ein weiterer Nachteil besteht in der Realisierung des Antriebs, der einerseits in das bei Schienenfahrzeugen vorgeschriebene Freiprofil passen soll, und andererseits einen möglichst großen Radstand für die Fortbewegung im Gelände ermöglichen soll.

Das erfindungsgemäße Fahrzeug ist **dadurch gekennzeichnet, dass** der untere Fahrzeugrahmen gegenüber dem oberen Fahrzeugrahmen um eine vertikale Achse verdrehbar und der obere Fahrzeugrahmen auf einem Drehschemel des unteren Fahrzeugrahmens gelagert ist.

Weitere vorteilhafte Merkmale der Erfindung sind den Patentansprüchen, der nachfolgenden Beschreibung und den Zeichnungen zu entnehmen.

Das Fahrzeug ist zufolge seiner zweifachen Fahrmöglichkeiten in der Lage, auf einem Satz Schienenräder in Längsrichtung des Geleises oder mit dem zweiten Antrieb quer dazu zu fahren. Das Gerät kann auf dem Geleise selbstfahrend sein kann von einer Schub- oder Zugmaschine bewegt werden. Weiters verfügt das Gerät über einen Ketten- oder Radantrieb, der bevorzugt quer zum Geleise, aber auch in jeder anderen Richtung betrieben werden kann. Für den wahlweisen Einsatz der Antriebsmittel sind die Schienenräder und der Ketten- oder Radantrieb relativ zueinander vertikal verstellbar. Dazu sind die Schienenräder an einem oberen Fahrzeugrahmen angeordnet. In einer Ausführungsform ist dieser obere Fahrzeugrahmen als obere Hubplattform ausgebildet, die gegenüber dem zweiten Fahrgestell des Ketten- oder Radantriebes vertikal verstellbar ist. Auf der Hubplattform sitzt auch ein Aufbau mit dem Greifer und der Ladefläche für die Lasten, insbesondere Schienen. Bevorzugt ist der Aufbau auf der Hubplattform schwenk- und/oder drehbar gelagert. Dadurch kann die Winkelstellung und/oder Drehstellung zwischen der Längserstreckung der Schienen und der jeweiligen Fahrrichtung des Gerätes beliebig eingestellt werden.

Damit der Greifer mit seinem Ausleger keine zu großen Dimensionen erreicht, kann der Ausleger auch aus- und einklappbar ausgebildet sein. Am Ende des Auslegers ist bevorzugt eine am Boden abstützbare Stütze vorgesehen. Die Ladefläche kann als Wippe ausgebildet sein, um bei Unebenheiten des Bodens die gelagerten Schienen etwa waagrecht zu halten.

Erfindungsgemäß sind der obere und der untere Fahrzeugrahmen gegeneinander verdrehbar. Die vertikale Verstellbarkeit des Ketten- oder Radantriebes ist dadurch gegeben, dass die Ketten- oder Radantriebselemente an Schwenkarmen angeordnet sind, die kraftgetrieben ausgefahren oder eingefahren werden können.

Im Folgenden wird die Erfindung anhand der Zeichnungen beispielsweise näher erläutert. Die Fig. 1 zeigt eine Ansicht des Fahrzeuges in der Funktionsstellung für den Transport auf dem Geleise. Die Fig. 2, 3 und 4 zeigen verschiedene Ansichten des Fahrzeugs quer zur Schienenrichtung. Die Fig. 5 bis 7 zeigen ein weiteres Ausführungsbeispiel der Erfindung.

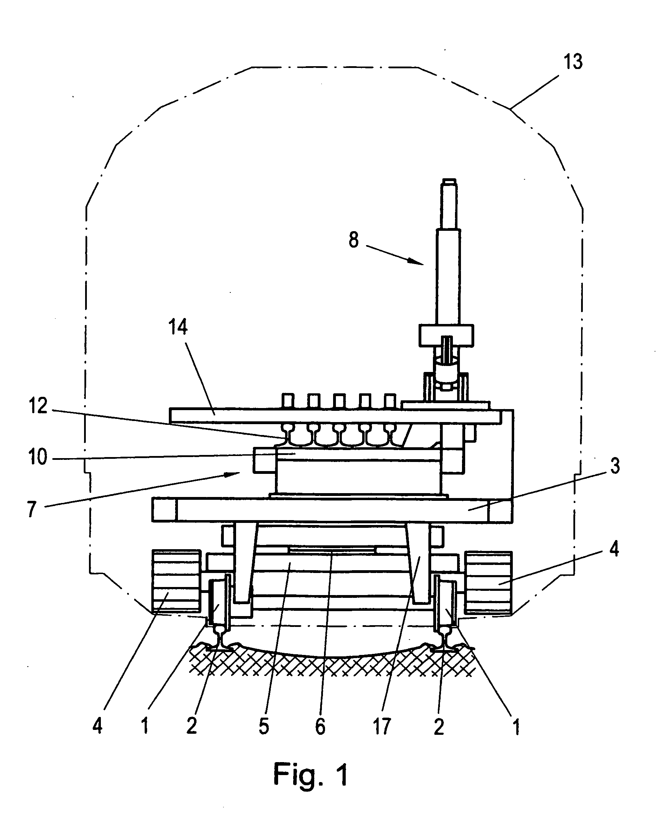

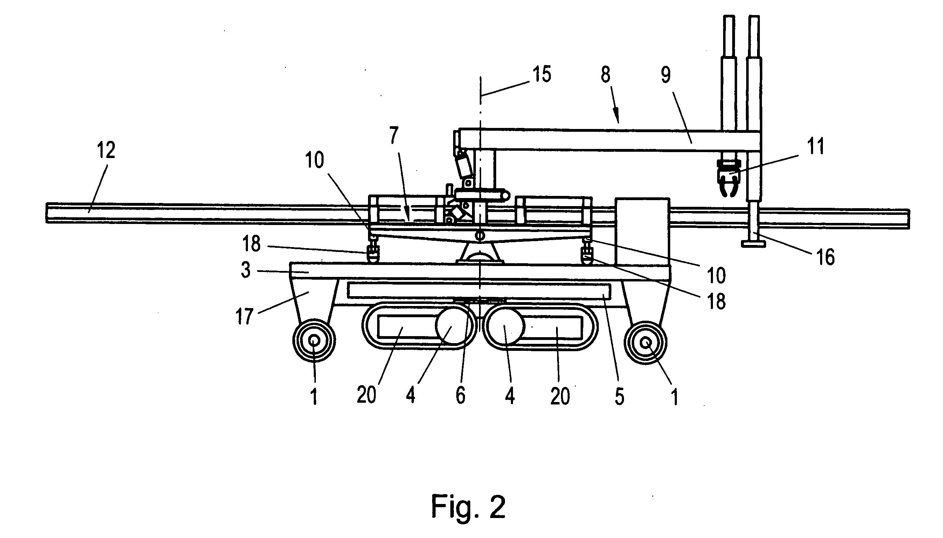

Gemäß Fig. 1 und Fig. 2 fährt das Fahrzeug mittels der Schienenräder 1 auf dem Geleise 2. Die Schienenräder sind mit einer oberen Hubplattform 3 verbunden, die Bestandteil des oberen Fahrzeugrahmens 17 ist oder an dieser befestigt ist. Sie befindet sich in abgesenkter Stellung. In Laufrichtung der Schienenräder 1 befinden sich die Elemente 20 des Ketten- oder Radantriebs 4. Im vorliegenden Beispiel besteht dieser Ketten- oder Radantrieb aus vier Raupenketten, die z. B. durch einen Dieselmotor oder auch elektrisch angetrieben sind. In der dargestellten Transportstellung des Gerätes ist der Ketten- oder Radantrieb vom Boden nach oben freigestellt, wobei sich der untere Fahrzeugrahmen 5 des Ketten- oder Radantriebs in naher Stellung zum oberen Fahrzeugrahmen 17 befindet.

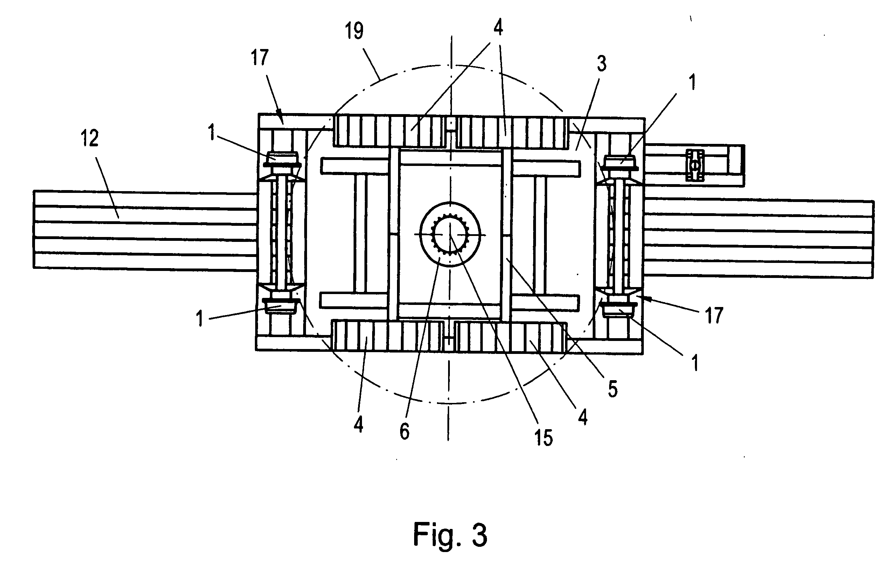

Der obere Fahrzeugrahmen 17 ist auf einem Drehschemel 6 gelagert, welcher mit dem unteren Fahrzeugrahmen über eine hier nicht dargestellte Hubvorrichtung verbunden ist. Durch diese Anordnung ist es möglich, durch Anheben oder Absenken der oberen Hubplattform 3 und somit des Fahrzeugrahmens 17 entweder auf den Schienenrädern oder mittels der Raupen oder Räder des Ketten- oder Radantriebes 4 zu fahren. Dabei können beide Antriebe beliebig gegeneinander verdreht werden, wobei der Ketten- oder Radantrieb 4 zwischen den Schienenrädern durchgedreht werden kann, wie in Fig. 3 mit dem Kreis 19 eingezeichnet ist.

Auf der oberen Hubplattform 3 ist ein Aufbau angeordnet, der alle sonstigen Arbeitsgeräte umfasst. Der Aufbau umfasst insbesondere die Ladefläche 7 und den Greifer 8.

Wie insbesondere der Figur 2 entnehmbar ist, ist der Greifer 8 entlang eines Greiferarms 9 bewegbar. Die Greiferzange 11 ist über die gesamte Länge des Greiferarms verschiebbar und kann auf- und abgesenkt werden, um die Last 12 von der Ladefläche 7 zu entnehmen und seitlich vom Gerät abzulegen. Der Greiferarm 9 trägt an seinem Ende eine hydraulisch betätigbare Stütze 16, mit der der Greifer seitlich am Boden abgestützt werden kann.

Durch die Klappbarkeit des Greiferarms ist es möglich, die Gesamtdimensionen des Gerätes innerhalb des für den Schienentransport erforderlichen Freiprofils 13 zu halten.

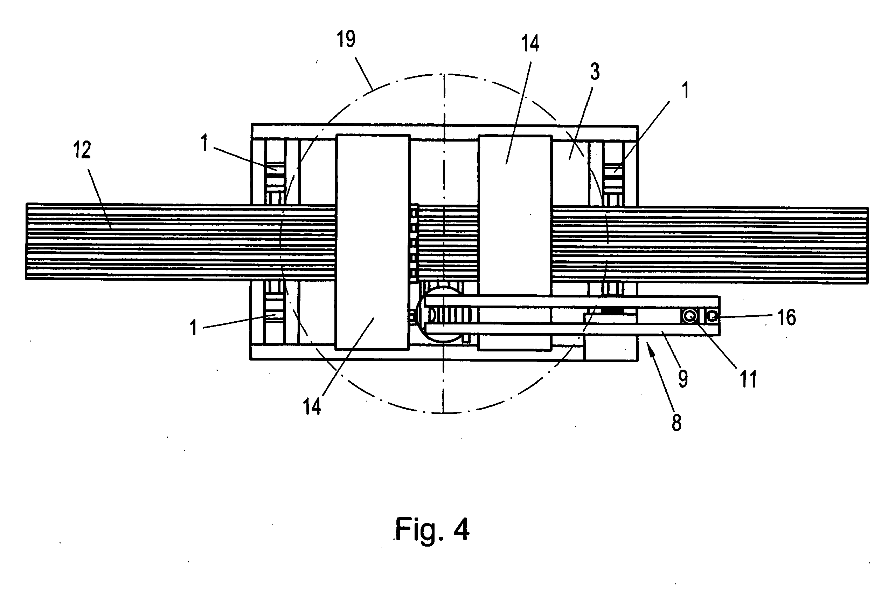

Den Figuren 3 und 4 sind weiters Transportflächen 14 zu entnehmen, die von oben auf den Schienen aufliegen und als zusätzliche Ladeplattform dienen.

In Fig. 2 ist erkennbar, dass die Ladefläche 7 als Wippe ausgebildet ist, die um die Schwenkachse 15 schwenkbar ist. Damit ist es möglich, etwaige Schrägstellungen des Gerätes auszugleichen. Dabei muss beachtet werden, dass die Schienen eine erhebliche Länge aufweisen können, sodass auch bei geringen Kippneigungen die Schienenenden erhebliche Hubbewegungen machen können. Die Wippe kann aber auch durch Auflageträger 10 ersetzt werden, die von Hydräulikstempein 18 vertikal verstellbar sind.

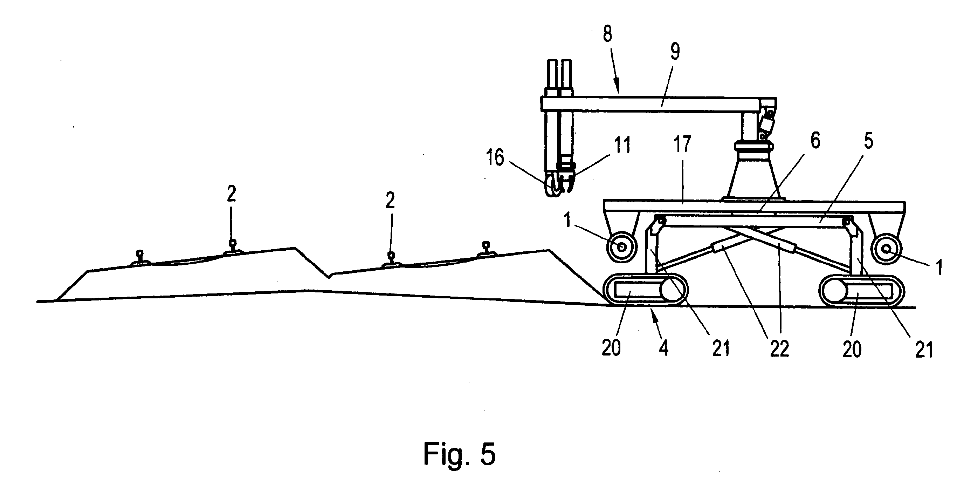

Die Fig. 5 bis 7 zeigen in verschiedenen Funktionsstellungen ein weiteres Ausführungsbeispiel des erfindungsgemäßen Fahrzeuges. Auch diese Figuren sind rein schematisch gehalten.

Auch die Konstruktion gemäß den Fig. 5 bis 7 kennzeichnet sich dadurch, dass das Fahrzeug Schienenräder 1 zum Fahren auf einem Geleise und einen Ketten- oder Radantrieb 4 zum Fahren auf dem Gelände oder auf der Straße aufweist. Auch hier ist der Ketten- oder Radantrieb zu den Schienenrädern vertikal verstellbar und die Fahrtrichtung des Ketten- oder Radantriebs kann gegenüber der Fahrtrichtung der Schienenräder verschwenkt werden.

Im Unterschied zur vorher dargestellten Konstruktion erfolgt die vertikale Verstellung des Ketten- oder Radantriebes mittels Schwenkarmen 21, an denen die Ketten- oder Radantriebselemente 20 angeordnet sind. Der obere Fahrzeugrahmen 17 und der untere Fahrzeugrahmen 5 sind mittels des Drehschemels 6 gegeneinander verdrehbar gelagert, sodass jegliche Winkelstellung zwischen den beiden Antriebsarten eingestellt werden kann. Für die Verstellung der Schwenkarme 21 sind in diesem Ausführungsbeispiel Hydraulikzylinder 22 vorgesehen. Es ist hier keine Hubvorrichtung zwischen den beiden Fahrzeugrahmen 17 und 5 vorgesehen.

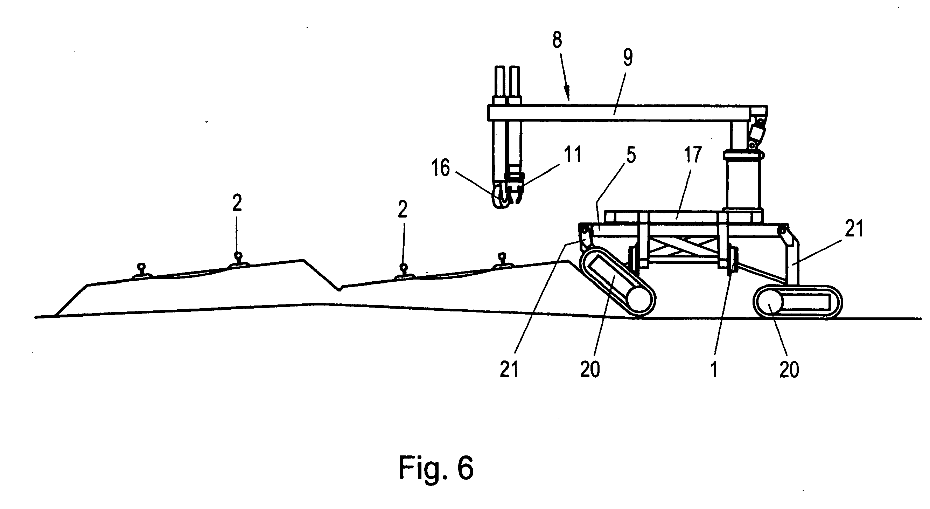

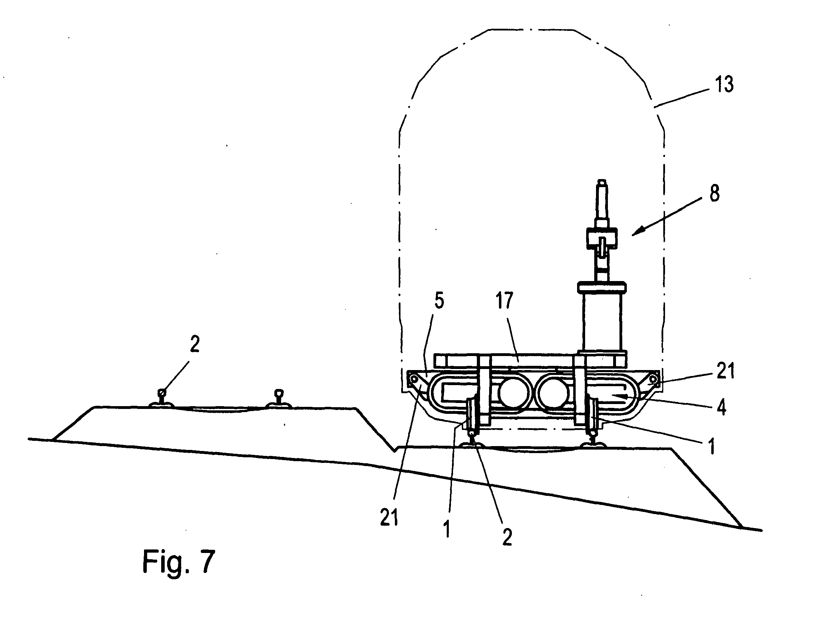

Die Konstruktion gemäß den Fig. 5 bis 7 hat den Vorteil, dass sich der Radstand zwischen den vorderen und hinteren Ketten- oder Radantriebselementen 20 vergrößert, wenn dieser Antrieb vertikal nach unten bewegt wird, um auf dem Gelände fahren zu können. Beim Einklappen oder Einziehen der Ketten- oder Radantriebselemente werden diese soweit nach innen gezogen, dass der Antrieb zwischen den vorderen und hinteren Schienenrädern 1 durchgedreht werden kann und dass eine eingezogene Transportstellung eingenommen werden kann, wie dies in Fig. 7 dargestellt ist. Durch eine entsprechende Steuerung können die Hydraulikzylinder 22 für die vorderen und hinteren Ketten- oder Radantriebselemente 20 unabhängig voneinander gesteuert werden. In Fig. 5 sind beide Schwenkarme 21 in einem Winkel von 90° zum unteren Fahrzeugrahmen 17 angeordnet. Für das Überwinden von Bodenunebenheiten kann es gemäß Fig. 6 vorteilhaft sein, die Winkelstellungen der Schwenkarme 21 entsprechend anzupassen, sodass Bodenunebenheiten wie Böschungen und Schienen leicht überwinden werden können und dabei noch der Vorteil gegeben ist, dass das Fahrzeug annähernd waagrecht gehalten wird. Das Waagrechthalten des Fahrzeuges ist insbesondere dann von Vorteil, wenn lange Lasten wie Schienenstücke transportiert werden sollen.

In den Fig. 5 bis 7 ist als Transportlast ein Arbeitsgerät eingezeichnet, nämlich ein Greifer 8 mit dem Greiferarm 9. Der obere Fahrzeugrahmen 17 dient als Ladeplattform. Es kann aber auch jede andere Form einer Last oder eines Arbeitswerkzeuges angeordnet werden wie z. B. ein Kabinenaufbau, Transportmulde oder andere Arbeitswerkzeuge.

Die Fig. 7 zeigt das Fahrzeug in einer möglichen Transportstellung, wobei die Schienenräder 1 auf den Schienen 2 laufen. Die Ketten- oder Radantriebselemente 20 sind derart nach oben gezogen, dass das Rollen auf den Schienen nicht behindert wird. Das Fahrzeug passt zur Gänze in das Freiprofil 13 für den Eisenbahnbetrieb. Sobald das Fahrzeug seinen Einsatzort erreicht hat, kann durch Absenken des Ketten- oder Radantriebes das Fahrzeug von den Schienen 2 abgehoben werden und das Fahrzeug kann seitlich den Schienenbereich verlassen.

### Bezugszeichenliste

- 1: Schienenräder
- 2: Geleis
- 3: Obere Hubplattform
- 4: Ketten- oder Radantrieb
- 5: Unterer Fahrzeugrahmen
- 6: Drehschemel
- 7: Ladefläche
- 8: Schienengreifer
- 9: Greiferarm
- 10: Auflageträger
- 11: Greiferzange
- 12: Last
- 13: Freiprofil
- 14: Transportflächen
- 15: Schwenkachse
- 16: Stütze
- 17: Oberer Fahrzeugrahmen
- 18: Hydraulikstempel
- 19: Kreis
- 20: Ketten- oder Radantriebselement
- 21: Schwenkarm
- 22: Hydraulikzylinder

## Patentansprüche

1. Fahrzeug mit Schienenrädern (1) zum Fahren auf einem Geleise (2) und einem Ketten- oder Radantrieb (4) zum Fahren auf dem Gelände oder Straße, wobei der Ketten- oder Radantrieb (4) zu den Schienenrädern (1) vertikal verstellbar und in seiner Fahrtrichtung gegenüber der Fahrtrichtung der Schienenräder (1) schwenkbar ist, wobei die Schienenräder (1) an einem oberen Fahrzeugrahmen (17) und der Ketten- oder Radantrieb (4) an einem unteren Fahrzeugrahmen (5) angeordnet sind und der obere Fahrzeugrahmen (17) zur Aufnahme von Lasten wie Schienen, Fahrzeugaufbauten, Arbeitsgeräte wie Schienengreifer etc eingerichtet ist, **dadurch gekennzeichnet, dass** der untere Fahrzeugrahmen (5) gegenüber dem oberen Fahrzeugrahmen (17) um eine vertikale Achse verdrehbar und der obere Fahrzeugrahmen (17) auf einem Drehschemel (6) des unteren Fahrzeugrahmens (5) gelagert ist.

2. Fahrzeug nach Anspruch 1, **dadurch gekennzeichnet, dass** die Fahrzeugrahmen (5, 17) relativ zueinander vertikal verstellbar sind, um das Fahrzeug wahlweise auf den Schienenrädern (1) oder auf dem Ketten- oder Radantrieb (4) fahren zu können.

3. Fahrzeug nach einem der Ansprüche 1 oder 2, **dadurch gekennzeichnet, dass** der obere Fahrzeugrahmen (17) mit einem Satz Schienenräder (1) als obere Hubplattform (3) ausgebildet ist, die gegenüber dem unteren Fahrzeugrahmen (5) des Ketten- oder Radantriebs (4) vertikal verstellbar ist.

4. Fahrzeug nach einem der Ansprüche 1 bis 3, **dadurch gekennzeichnet, dass** der Aufbau auf dem oberen Fahrzeugrahmen (17) drehbar gelagert ist.

5. Fahrzeug nach einem der Ansprüche 1 bis 4, **dadurch gekennzeichnet, dass** eine am oberen Fahrzeugrahmen (17) angeordnete Ladefläche (7) durch Auflageträger (10) gebildet ist, die kraftbetrieben, bevorzugt hydraulisch, vertikal verstellbar sind.

6. Fahrzeug nach Anspruch 5, **dadurch gekennzeichnet, dass** die Ladefläche (7) als Wippe ausgebildet ist.

7. Fahrzeug nach Anspruch 1, **dadurch gekennzeichnet, dass** der Ketten- oder Radantrieb (4) gegenüber dem unteren Fahrzeugrahmen (5) in vertikaler Richtung verstellbar ist.

8. Fahrzeug nach Anspruch 7, **dadurch gekennzeichnet, dass** die Ketten- oder Radantriebselemente (20) des Ketten- oder Radantriebes (4) an Schwenkarmen (21) angeordnet sind, wodurch diese Elemente (20) nach unten und auswärts in Fahrtstellung oder nach oben und einwärts gestellt werden können.

9. Fahrzeug nach Anspruch 8, **dadurch gekennzeichnet, dass** die Ketten- oder Radantriebselemente (20) von Hydraulikzylindern (22) verstellbar sind.

10. Fahrzeug nach Anspruch 9, **dadurch gekennzeichnet, dass** die jeweils eiden vorderen und hinteren Ketten- oder Radantriebselemente (20) unabhängig voneinander gesteuert sind, um Bodenunebenheiten und Bodengefälle ausgleichen zu können.

11. Fahrzeug nach einem der Ansprüche 1 bis 10, **dadurch gekennzeichnet, dass** als Arbeitsgerät ein Schienengreifer (8) entlang eines Greiferarmes (9) bewegbar ist.

12. Fahrzeug nach Anspruch 11, **dadurch gekennzeichnet, dass** am Ende des Greifarmes (9) eine am Boden abstützbare Stütze (16) vorgesehen ist.

13. Fahrzeug nach einem der Ansprüche 8 bis 12, **dadurch gekennzeichnet, dass** die Ketten- oder Radantriebselemente (20) zwischen die Schienenräder (1) einschwenkbar und in eingeschwenkter Stellung mit dem unteren Rahmen (5) frei verdrehbar sind.

14. Fahrzeug nach Anspruch 13, **dadurch gekennzeichnet, dass** die Ketten- oder Radantriebselemente (20) in eingeschwenkter Stellung quer zur Fahrtrichtung der Schienenräder (1) in das Freiprofil (13) für den Eisenbahnbetrieb passend ausgebildet sind.

## Claims

1. Vehicle with rail wheels (1) for travelling on a track (2) and a chain or wheel drive (4) for travelling over land or on roads, wherein the chain or wheel drive (4) is vertically adjustable relative to the rail wheels (1) and is capable of swivelling in its direction of travel relative to the direction of travel of the rail wheels (1), the rail wheels (1) being mounted on an upper vehicle frame (17) and the chain or wheel drive (4) being mounted on a lower vehicle frame (5) and the upper vehicle frame (17) being designed to carry loads such as rails, vehicle superstructures, working equipment such as rail grippers, etc., **characterised in that** the lower vehicle frame (5) is rotatable relative to the upper vehicle frame (17) about a vertical axis and the upper vehicle frame (17) is mounted on a bogie (6) of the lower vehicle frame (5).

2. Vehicle according to claim 1, **characterised in that** the vehicle frames (5, 17) are vertically adjustable relative to one another in order that the vehicle can be run on the rail wheels (1) or on the chain or wheel drive (4), as desired.

3. Vehicle according to one of claims 1 or 2, **characterised in that** the upper vehicle frame (17) is constructed with a set of rail wheels (1) as an upper raised platform (3), which is vertically adjustable relative to the lower vehicle frame (5) of the chain or wheel drive (4).

4. Vehicle according to one of claims 1 to 3, **characterised in that** the structure is rotatably mounted on the upper vehicle frame (17).

5. Vehicle according to one of claims 1 to 4, **characterised in that** a loading surface (7) mounted on the upper vehicle frame (17) is formed by load carriers (10) which are power-operated to be vertically adjustable, preferably by hydraulic power.

6. Vehicle according to claim 5, **characterised in that** the loading surface (7) is constructed as a tilting table.

7. Vehicle according to claim 1, **characterised in that** the chain or wheel drive (4) is vertically adjustable relative to the lower vehicle frame (5).

8. Vehicle according to claim 7, **characterised in that** the chain or wheel drive elements (20) of the chain or wheel drive (4) are mounted on swivel arms (21), by means of which these elements (20) can be moved downwards and outwards in the travel position or upwards and inwards.

9. Vehicle according to claim 8, **characterised in that** the chain or wheel drive elements (20) are movable by hydraulic cylinders (22).

10. Vehicle according to claim 9, **characterised in that** the two front and rear chain or wheel drive elements (20) are controlled independently of one another in order to be able to compensate for uneven ground and gradients.

11. Vehicle according to one of claims 1 to 10, **characterised in that** a tail gripper (8) is movable along a gripper arm (9) as a working tool.

12. Vehicle according to claim 11, **characterised in that** at the end of the gripper arm (9) is provided a prop (16) that can be supported on the ground.

13. Vehicle according to one of claims 8 to 12, **characterised in that** the chain or wheel drive elements (20) can be swivelled inwards between the rail wheels (1) and in the swivelled-in position are freely rotatable with the lower frame (5).

14. Vehicle according to claim 13, **characterised in that** in the swivelled-in position at right angles to the direction of travel of the rail wheels (1), the chain or wheel drive elements (20) are designed to fit into the open profile (13) for travelling on rails.

## Revendications

1. Véhicule ayant des roues (1) pour des rails pour se déplacer sur une voie ferrée (2) et un entraînement (4) de chaîne ou de roue pour se déplacer sur terre ou sur une chaussée, dans lequel l'entraînement de chaîne ou de roue est réglable verticalement par rapport aux roues (1) pour des rails et peut basculer dans sa direction de marche par rapport à la direction de marche des roues (1) pour des rails, les roues (1) pour des rails étant disposées sur un châssis (17) supérieur de véhicule et l'entraînement (4) de chaîne ou de roue sur, un châssis (5) inférieur de véhicule et le châssis (17) supérieur de véhicule étant aménagé pour recevoir des charge, comme des superstructures de véhicule, des engins de travail, des grappins de rails, etc., **caractérisé en ce que** le châssis (5) inférieur de véhicule peut tourner autour d'un axe vertical par rapport au châssis (17) supérieur de véhicule et le châssis (17) supérieur de véhicule est monté sur une traverse (6) pivotante du châssis (5) inférieur du véhicule.

2. Véhicule suivant la revendication 1, **caractérisé en ce que** les châssis (5, 17) de véhicule peuvent être réglables verticalement l'un par rapport à l'autre pour pouvoir déplacer le véhicule au choix sur les roues (1) pour des rails ou sur l'entraînement (4) de chaîne ou de roue.

3. Véhicule suivant la revendication 1 ou 2, **caractérisé en ce que** le châssis (17) supérieur du véhicule est constitue en ayant un jeu de roues (1) pour des rails comme plateforme (3) supérieure de levage, qui peut être déplacée verticalement par rapport au châssis (5) inférieur de véhicule de l'entraînement (4) de chaîne ou de roue.

4. Véhicule suivant l'une des revendications 1 à 3, **caractérisé en ce que** la structure est montée tournante sur le châssis (17) supérieur du véhicule.

5. Véhicule suivant l'une des revendications 1 à 4, **caractérisé en ce qu'**une surface (7) de charge est disposée sur le châssis (17) supérieur et formée par des poutres de support, qui peuvent être déplacées verticalement en étant entraînées par force ou, de préférence, hydrauliquement.

6. Véhicule suivant la revendication 5, **caractérisé en ce que** la surface (7) de charge est constituée en bascule.

7. Véhicule suivant la revendication 1, **caractérisé en ce que** l'entraînement (4) de chaîne ou de roue est réglable dans la direction verticale par rapport au châssis (5) inférieur du véhicule.

8. Véhicule suivant la revendication 7, **caractérisé en ce que** les éléments (20) de l'entraînement (4) de chaîne ou de roue sont disposés sur des bras (21) pivotants, de sorte que ces éléments peuvent être mis vers le bas et à l'extérieur en position de marche ou vers le haut et vers l'intérieur.

9. Véhicule suivant la revendication 8, **caractérisé en ce que** les éléments (20) d'entraînement de chaîne ou de roue sont réglables par des vérins (22) hydrauliques.

10. Véhicule suivant la revendication 9, **caractérisé en ce que** respectivement les deux éléments (20) avant et arrière d'entraînement de chaîne ou de roue sont commandés indépendamment l'un de l'autre afin de pouvoir compenser des inégalités du sol et des déclivités.

11. Véhicule suivant l'une des revendications 1 à 10, **caractérisé en ce que**, comme engin de travail, un grappin (8) de rails peut être déplacé le long d'un bras (9) de grappin.

12. Véhicule suivant la revendication 11, **caractérisé en ce qu'**un appui (16) pouvant s'appuyer sur le sol est prévu à l'extrémité du bras (9) du grappin.

13. Véhicule suivant l'une des revendications 8 à 12, **caractérisé en ce que** les éléments (20) d'entraînement de chaîne ou de roue peuvent rentrer entre les roues (1) pour des rails et en position rentrée peuvent tourner librement avec le châssis (5) inférieur.

14. Véhicule suivant la revendication 13, **caractérisé en ce que** les éléments (20) de chaîne ou de roue sont constitués de manière à s'adapter, en position transversalement au sens de marche des roues (1) pour des rails, dans le profil (13) à laisser libre pour le service ferroviaire.
